# EUROPÄISCHE PATENTSCHRIFT

(11) **EP 1 632 320 B1**
(45) Veröffentlichungstag und Bekanntmachung des Hinweises auf die Patenterteilung: **03.10.2007**
(21) Anmeldenummer: 05107776.6
(22) Anmeldetag: 24.08.2005
(51) Int. Cl.: B25J 19/00

(54) **Roboterhandachse mit Schlauchantrieb zur Drehung eines Versorgungsschlauchs, und zugehöriges Betriebsverfahren**
Robot wrist with hose drive for rotating a supply hose, and associated process
Poignet de robot avec entraînemet de tuyau pour la rotation d'un tuyau d'alimentation, et procédé associé

(30) Priorität: 06.09.2004 DE 102004043014
(43) Veröffentlichungstag der Anmeldung: 08.03.2006
(73) Patentinhaber: Dürr Systems GmbH, 70435 Stuttgart (DE)
(72) Erfinder: Hezel, Thomas, 71679 Asperg (DE); Maxharraj, Bekim, 74321 Bietigheim-Bissingen (DE); Leiensetter, Bernd, 74360 Ilsfeld (DE); Herre, Frank, 71739 Oberriexingen (DE)
(74) Vertreter: Beier, Ralph

(56) Entgegenhaltungen:
- US-B1- 6 455 799

## Beschreibung

Die Erfindung betrifft eine Roboterhandachse, insbesondere für einen Lackierroboter, gemäß dem Oberbegriff des Anspruchs 1 sowie ein zugehöriges Betriebsverfahren gemäß dem Oberbegriff des Anspruchs 12.

In modernen Lackieranlagen werden mehrachsige Lackierroboter eingesetzt, die über eine dreiachsige Roboterhandachse ein Applikationsgerät, wie beispielsweise einen Rotationszerstäuber, führen. Die zum Betrieb des Applikationsgeräts erforderlichen Versorgungsschläuche für Farbe, Antriebsluft, Lenkluft und ähnliches werden hierbei durch eine Innendurchführung in der Roboterhandachse zu dem Applikationsgerät geführt. Derartige Roboterhandachsen sind beispielsweise aus DE 696 17 825 T2, DE 101 39 088 A1 und EP 0 080 325 A1 bekannt.

Nachteilig an dieser Führung des Farbschlauchs durch die hochbewegliche Roboterhandachse ist die Tatsache, dass der Farbschlauch bei einer Bewegung der Roboterhandachse stark deformiert wird, was eine Molchbarkeit des Farbschlauchs innerhalb der Roboterhandachse ausschließt. Zur Minimierung von Farbwechselverlusten wäre es jedoch wünschenswert, dass der Farbschlauch auf seiner gesamten Länge bis hin zu dem Applikationsgerät molchbar ist, also auch innerhalb der hochbeweglichen Roboterhandachse.

Aus DE 39 29 139 A1, DE 600 06 165 T2, WO 85/01686 A1, DE 100 33 986 A1 und DE 38 02 533 A1 sind weitere entsprechende Anordnungen bekannt, die jedoch das vorstehend genannte Problem ebenfalls nicht lösen.

Aus der US-A-6 455 799 ist eine Roboterhandachse gemäß dem Oberbegriff des Anspruchs 1 bekannt, in der die Versorgungsschläuche in einer drehbar gelagerten Führungshalterung befestigt sind, wodurch Torsionsbelastungen der Schläuche in der Rotorhandachse abgeschwächt werden.

Der Erfindung liegt deshalb die Aufgabe zugrunde, die vorstehend beschriebenen bekannten Roboterhandachsen im Hinblich auf ihre Molchbarkeit zu verbessern.

Diese Aufgabe wird durch eine Roboterhandachse gemäß Anspruch 1, die Verwendung gemäß Anspruch 11 einer derartigen Roboterhandachse in einem Lackierroboter, und ein entsprechendes Betriebsverfahren gemäß Anspruch 12 gelöst.

Die Erfindung beruht auf der Erkenntnis, dass die Molchbarkeit insbesondere durch Torsionsbelastungen des Farbschlauchs beeinträchtigt wird, die durch eine Bewegung der Roboterhandachse entstehen, wohingegen eine reine Biegung des Farbschlauchs weniger störend ist und die Molchbarkeit deshalb nicht ausschließt.

Die Erfindung umfasst deshalb die allgemeine technische Lehre, eine Roboterhandachse zu schaffen, bei der die durch die Roboterhandachse hindurch geführten Versorgungsschläuche bei einer Bewegung der Roboterhandachse im Wesentlichen nur auf Biegung belastet werden, wohingegen nur vernachlässigbare Torsionsbelastungen auf die Versorgungsschläuche wirken. Dies bietet den Vorteil, dass die Molchbarkeit der durch die Roboterhandachse hindurch geführten Versorgungsschläuche durch eine Bewegung der Roboterhandachse nicht oder nur kaum beeinträchtigt wird.

Die erfindungsgemäße Roboterhandachse weist wie die herkömmlichen Roboterhandachsen mehrere Handgelenksteile auf, die relativ zueinander drehbar sind, wobei die erfindungsgemäße Roboterhandachse in dem bevorzugten Ausführungsbeispiel drei verdrehbare Handgelenksteile aufweist und an einem kinematisch ausgangsseitigen Anschlussflansch eine drehbare Montage eines Applikationsgerätes ermöglicht, so dass die erfindungsgemäße Roboterhandachse in diesem Ausführungsbeispiel drei Achsen (d.h. drei Bewegungsfreiheitsgrade) aufweist. Die Erfindung ist jedoch hinsichtlich der Anzahl der Achsen nicht auf Roboterhandachsen mit drei Achsen beschränkt, sondern umfasst auch erfindungsgemäße Roboterhandachsen mit einer größeren oder kleineren Anzahl von beweglichen Achsen.

In den Handgelenksteilen ist hierbei eine durch die gesamte Roboterhandachse durchgehende Innendurchführung angeordnet, in der die Versorgungsschläuche zur Versorgung des von der Roboterhandachse geführten Applikationsgerätes geführt werden.

Die Innendurchführung kann beispielsweise aus einem Leitungskanal bestehen, der gegenüber der Roboterhandachse nicht abgegrenzt ist und die Versorgungsschläuche zum Betrieb des Applikationsgerätes aufnimmt. Hierbei kann es jedoch bei einer Bewegung der Roboterhandachse zu einem unerwünschten Berührungskontakt zwischen den hindurchgeführten Versorgungsschläuchen und der meist zerklüfteten Innenwand der Roboterhandachse kommen.

Vorzugsweise weist die durch die Roboterhandachse hindurchgehende Innendurchführung deshalb einen Schutzschlauch auf, der die Innendurchführung nach außen begrenzt und damit eine Beschädigung oder einen erhöhten Verschleiß der durch die Roboterhandachse hindurch geführten Versorgungsschläuche bei einer Bewegung der Roboterhandachse verhindert.

Darüber hinaus kann ein derartiger Schutzschlauch auch aus einem elektrisch isolierenden Material bestehen, um die in dem durchgehenden Farbschlauch befindliche, elektrisch aufgeladene Farbe nach außen zu isolieren, wobei der Schutzschlauch vorzugsweise ein Isolationsvermögen von mindestens 50 kV aufweist.

Erfindungsgemäß verlaufen die Versorgungsschläuche zum Betrieb des Applikationsgerätes hierbei jedoch nicht ungeordnet innerhalb der Innendurchführung. Stattdessen weist die erfindungsgemäße Roboterhandachse einen Schlauchantrieb auf, der den Versorgungsschlauch bzw. die Versorgungsschläuche in der Innendurchführung entsprechend der Drehung der Handgelenksteile zwangsgeführt dreht, um die vorstehend erwähnte unerwünschte Torsionsbelastung der Versorgungsschläuche zu vermeiden oder zumindest zu minimieren. Bei einer Bewegung der Roboterhandachse und einer damit verbundenen Drehung der einzelnen Handgelenksteile relativ zueinander wird der durchgeführte Versorgungsschlauch also einseitig oder beidseitig von dem Schlauchantrieb zwangsgeführt gedreht, um die Torsionsbelastung zu vermeiden oder zumindest zu minimieren.

Hierbei ermöglicht der Schlauchantrieb eine Drehung des durch die Roboterhandachse hindurch geführten Versorgungsschlauchs unabhängig von dem Antrieb der einzelnen Handgelenksteile. Der Schlauchantrieb kann den Versorgungsschlauch also relativ zu einem oder mehreren Handgelenksteilen drehen.

In einer Variante der Erfindung wirkt der Schlauchantrieb sowohl in dem kinematisch eingangsseitigen Handgelenksteil als auch in dem kinematisch ausgangsseitigen Handgelenksteil auf den Versorgungsschlauch. Vorzugsweise dreht der Schlauchantrieb den durch die Innendurchführung hindurch geführten Versorgungsschlauch hierbei in dem kinematisch eingangsseitigen Handgelenksteil einerseits und in dem kinematisch ausgangsseitigen Handgelenksteil andererseits unabhängig voneinander.

Es besteht also die Möglichkeit, dass der Versorgungsschlauch in dem kinematisch eingangsseitigen Handgelenksteil stärker oder schwächer gedreht wird, als in dem kinematisch ausgangsseitigen Handgelenksteil.

In einer anderen Variante der Erfindung wirkt der Schlauchantrieb dagegen nur in dem kinematisch eingangsseitigen Handgelenksteil auf den Versorgungsschlauch, während der Versorgungsschlauch in dem kinematisch ausgangsseitigen Handgelenksteil drehfest (d.h. verdrehsicher) fixiert ist. Diese Variante der Erfindung ist konstruktiv wesentlich einfacher, da der Schlauchantrieb nicht durch die gesamte Roboterhandachse hindurch bis zu dem kinematisch ausgangsseitigen Handgelenksteil wirken muss.

Die Drehung des Versorgungsschlauchs erfolgt vorzugsweise relativ zu dem jeweiligen Handgelenksteil oder zu der Innendurchführung, wobei die Drehung vorzugsweise in Bezug auf die Mittelachse der Innendurchführung erfolgt. Es ist jedoch theoretisch auch möglich, dass der durch die Roboterhandachse hindurch geführte Versorgungsschlauch in Bezug auf seine eigene Längsachse gedreht wird.

In einem bevorzugten Ausführungsbeispiel der Erfindung wird der durch die Roboterhandachse hindurchgeführte Versorgungsschlauch in dem kinematisch eingangsseitigen Handgelenksteil und/oder in dem kinematisch ausgangsseitigen Handgelenksteil und/oder in einem dazwischen befindlichen Handgelenksteil durch eine Führungsscheibe geführt. Vorzugsweise ist in der erfindungsgemäßen Roboterhandachse sowohl in dem kinematisch eingangsseitigen Handgelenksteil als auch in dem kinematisch ausgangsseitigen Handgelenksteil jeweils eine Führungsscheibe zur Führung des Versorgungsschlauchs bzw. der Versorgungsschläuche angeordnet, wohingegen in dem dazwischen liegenden Handgelenksteil keine Führungsscheibe angeordnet ist. Eine derartige Führungsscheibe ermöglicht vorteilhaft eine Führung des Versorgungsschlauchs oder der durchgeführten Versorgungsschläuche in radialer Richtung und in Umfangsrichtung bezüglich der Längsachse der Innendurchführung, wodurch die einzelnen Versorgungsschläuche geordnet werden. Darüber hinaus ermöglicht die Führung mehrerer Versorgungsschläuche in einer Führungsscheibe eine winkelsynchrone Drehung der Versorgungsschläuche in Bezug auf die Längsachse der Innendurchführung.

In der vorstehend beschriebenen Variante mit einer drehfesten Fixierung des durchgehenden Versorgungsschlauchs in dem kinematisch ausgangsseitigen Handgelenksteil kann dies dadurch erreicht werden, dass die Führungsscheibe in dem kinematisch ausgangsseitigen Handgelenksteil drehfest montiert ist.

Bei der anderen Variante mit einem beidseitig wirkenden Schlauchantrieb ist die Führungsscheibe dagegen in dem kinematisch eingangsseitigen Handgelenksteil und in dem kinematisch ausgangsseitigen Handgelenksteil vorzugsweise drehbar montiert.

Der Schlauchantrieb wirkt hierbei vorzugsweise auf die Führungsscheibe und dreht diese vorzugsweise in Bezug auf die Längsachse der Innendurchführung.

Weiterhin ist zu erwähnen, dass die Erfindung nicht auf die vorstehend beschriebene Roboterhandachse als einzelnes Bauteil beschränkt ist, sondern auch einen vollständigen Roboter, insbesondere einen Lackierroboter, mit einer derartigen erfindungsgemäßen Roboterhandachse umfasst.

Darüber hinaus umfasst die Erfindung die neuartige Verwendung der vorstehend beschriebenen erfindungsgemäßen Roboterhandachse in einem Lackierroboter.

Ferner umfasst die Erfindung auch ein entsprechendes Betriebsverfahren, wie es aus der vorstehenden Beschreibung der erfindungsgemäßen Roboterhandachse hervorgeht.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: Eine Seitenansicht eines Lackierroboters mit einer erfindungsgemäßen Roboterhandachse,
- Figuren 2A-2D: Querschnitts- bzw. Seitenansichten der Roboterhandachse aus Figur 1 sowie
- Figur 3: eine axiale Vorderansicht einer Führungsscheibe in der Roboterhandachse.

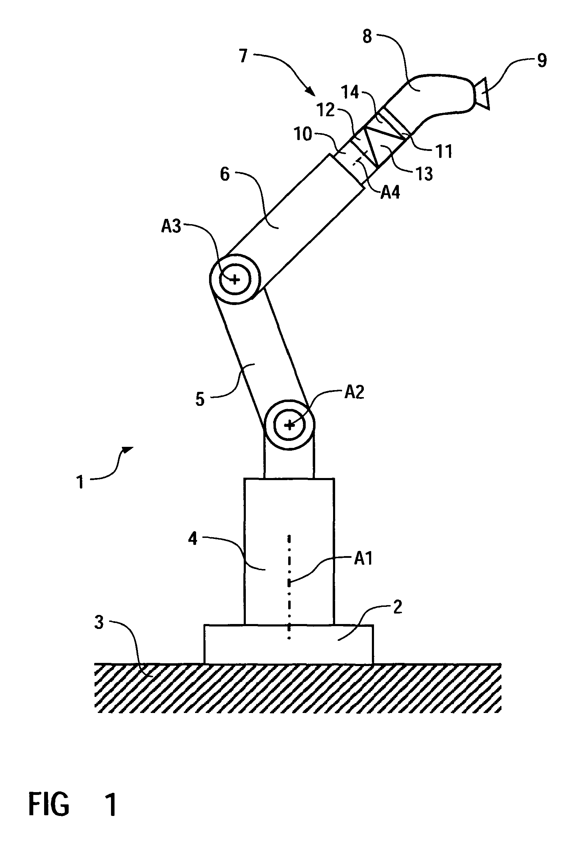

Die in Figur 1 dargestellte vereinfachte Zeichnung zeigt einen erfindungsgemäßen Lackierroboter 1, der beispielsweise zur Lackierung von Kraftfahrzeugkarosserieteilen eingesetzt werden kann.

Der Lackierroboter 1 ist mit seinem Gestell 2 auf einem Fundament 3 befestigt, wobei das Gestell 2 des Lackierroboters 1 ein Karussell 4 trägt, das relativ zu dem Gestell 2 um eine erste Achse A1 drehbar ist. Der Antrieb des Karussells 4 erfolgt hierbei durch einen Elektromotor, der zur Vereinfachung nicht dargestellt ist.

Weiterhin weist der Lackierroboter 1 einen Roboterarm 5 auf, der um eine zweite Achse A2 relativ zu dem Karussell 4 drehbar ist, wobei der Antrieb des Roboterarms 5 ebenfalls durch einen zur Vereinfachung nicht dargestellten Elektromotor erfolgt.

Ferner ist ein weiterer Roboterarm 6 vorgesehen, der relativ zu dem Roboterarm 5 um eine dritte Achse A3 drehbar ist, wobei der Antrieb des Roboterarms 6 ebenfalls durch einen zur Vereinfachung nicht dargestellten Elektromotor erfolgt.

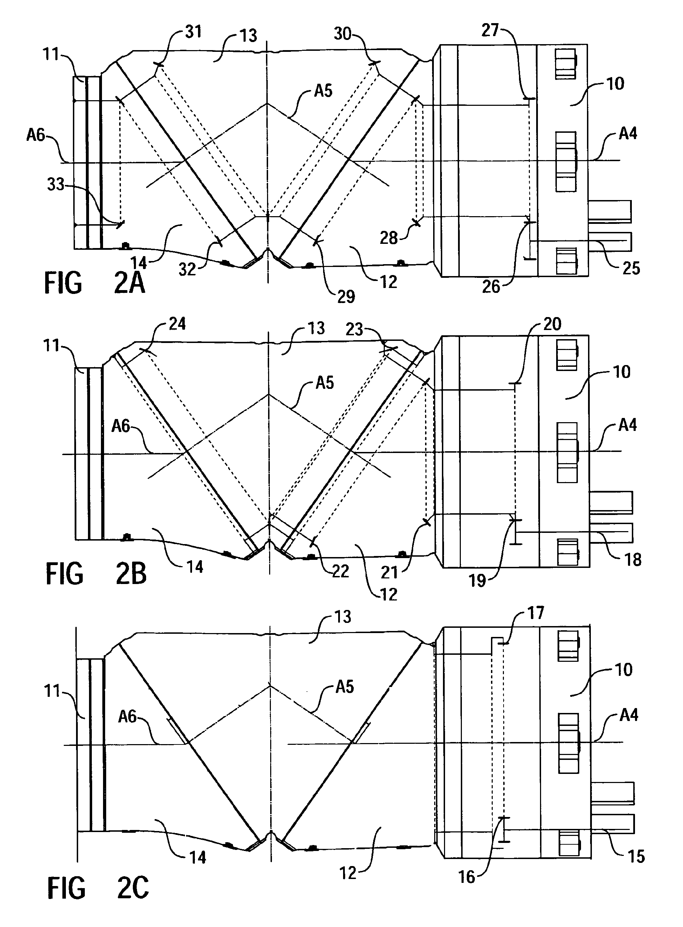

Am distalen Ende des Roboterarms 6 ist eine erfindungsgemäße Roboterhandachse 7 befestigt, die in den Figuren 2A - 2D detailliert dargestellt ist und noch eingehend beschrieben wird.

Die Roboterhandachse 7 führt einen herkömmlichen Rotationszerstäuber 8, der einen Glockenteller 9 antreibt und ein Beschichtungsmittel auf die Kraftfahrzeugkarosserieteile appliziert.

Die Roboterhandachse 7 weist an ihrer kinematischen Eingangsseite einen Anschlussflansch 10 auf, der drehfest und starr an dem distalen Ende des Roboterarms 6 befestigt ist.

Auf der dem Anschlussflansch 10 gegenüberliegenden Seite weist die Roboterhandachse 7 einen drehbaren Anschlussflansch 11 auf, an dem der Rotationszerstäuber 8 drehbar befestigt ist.

Zwischen dem kinematisch eingangsseitigen Anschlussflansch 10 und dem kinematisch ausgangsseitigen Anschlussflansch 11 sind drei Handgelenksteile 12-14 angeordnet, wobei die Handgelenksteile 12-14 relativ zueinander und in Bezug auf die beiden Anschlussflansche 10, 11 drehbar sind.

Das Handgelenksteil 12 ist hierbei um eine vierte Achse A4 relativ zu dem kinematisch eingangsseitigen Anschlussflansch 10 drehbar.

Das mittig angeordnete Handgelenksteil 13 ist dagegen um eine fünfte Achse A5 relativ zu dem Handgelenksteil 12 drehbar.

Weiterhin ist das Handgelenksteil 14 relativ zu dem Handgelenksteil 13 drehbar, jedoch ist die Drehung des Handgelenksteils 14 relativ zu dem Handgelenksteil 13 zwangsgekoppelt mit der Drehung des Handgelenksteils 12 relativ zu dem Handgelenksteil 13.

Ferner ist das Handgelenksteil 14 relativ zu dem Anschlussflansch 11 um eine sechste Achse A6 drehbar.

Im folgenden wird nun anhand von Figur 2C die Drehung des Handgelenksteils 12 um die vierte Achse A4 relativ zu dem Anschlussflansch 10 beschrieben, wobei zur Vereinfachung nur die Bauteile dargestellt sind, die diese Drehung bewirken.

Hierzu dient eine nur schematisch dargestellte Antriebswelle 15, die ein ebenfalls nur schematisch dargestelltes Außenzahnrad 16 antreibt, wobei das Außenzahnrad 16 in ein mit dem Handgelenksteil 12 drehfest verbundenes Innenzahnrad 17 eingreift. Eine Drehung der Antriebswelle 15 führt also zu einer Drehung des Außenzahnrads 16, wobei diese Drehung über die Kopplung zwischen dem Außenzahnrad 16 und dem Innenzahnrad 17 auf das Handgelenksteil 12 übertragen wird.

Im folgenden wird nun anhand von Figur 2B die Drehung des mittig angeordneten Handgelenksteils 13 um die Achse A5 relativ zu dem Handgelenksteil 12 beschrieben, wobei zur Vereinfachung hierbei nur die Bauteile dargestellt sind, die für diese Drehung erforderlich sind.

Hierzu weist die Roboterhandachse 7 eine weitere Antriebswelle 18 auf, die ein weiteres Außenzahnrad 19 dreht, wobei das Außenzahnrad 19 in eine Außenzahnrad 20 eingreift und dieses dreht. Das Außenzahnrad 20 weist an seinem kinematisch ausgangsseitigen Ende eine Schrägverzahnung 21 auf, die in eine entsprechende Schrägverzahnung 22 eingreift, wobei die Schrägverzahnung 22 drehfest mit dem mittig angeordneten Handgelenksteil 13 verbunden ist. Eine Drehung der Antriebswelle 18 führt also über das Außenzahnrad 19, das Außenzahnrad 20, die Schrägverzahnung 21 und die Schrägverzahnung 22 zu einer Drehung des Handgelenksteils 13 relativ zu dem Handgelenksteil 12, wobei die Drehung um die Achse A4 unabhängig von der Drehung um die Achse A5 gesteuert werden kann.

Weiterhin ist zu erwähnen, dass das Handgelenksteil 13 eine weitere Schrägverzahnung 23 trägt, die in eine Schrägverzahnung 24 eingreift, die drehfest mit dem Handgelenksteil 14 verbunden ist, so dass die Drehung zwischen dem Handgelenksteil 14 und dem Handgelenksteil 13 mit der Drehung zwischen dem Handgelenksteil 13 und dem Handgelenksteil 12 zwangsgekoppelt ist.

Im folgenden wird nun anhand von Figur 2A die Drehung des Antriebsflanschs 11 relativ zu dem Handgelenksteil 14 um die Achse A6 beschrieben.

Hierzu weist die Roboterhandachse 7 eine weitere Antriebswelle 25 auf, die ein Außenzahnrad 26 trägt, das in ein weiteres Außenzahnrad 27 eingreift und dieses dreht. Das Außenzahnrad 27 weist an seinem kinematisch ausgangsseitigen Ende eine Schrägverzahnung 28 auf, die in eine entsprechende Schrägverzahnung 29 an dem Handgelenksteil 13 eingreift.

Weiterhin weist das Handgelenksteil 13 eine Schrägverzahnung 30 auf, die mit der Schrägverzahnung 29 drehfest gekoppelt ist. Die Schrägverzahnung 30 an dem Handgelenksteil 13 greift wiederum in eine Schrägverzahnung 31 an dem Handgelenksteil 14. Der Anschlussflansch 11 weist schließlich eine Schrägverzahnung 33 auf, die in die Schrägverzahnung 32 eingreift. Eine Drehung der Antriebswelle 25 wird also über die Außenzahnräder 26, 27 und die Schrägverzahnungen 28-33 auf den Anschlussflansch 11 übertragen.

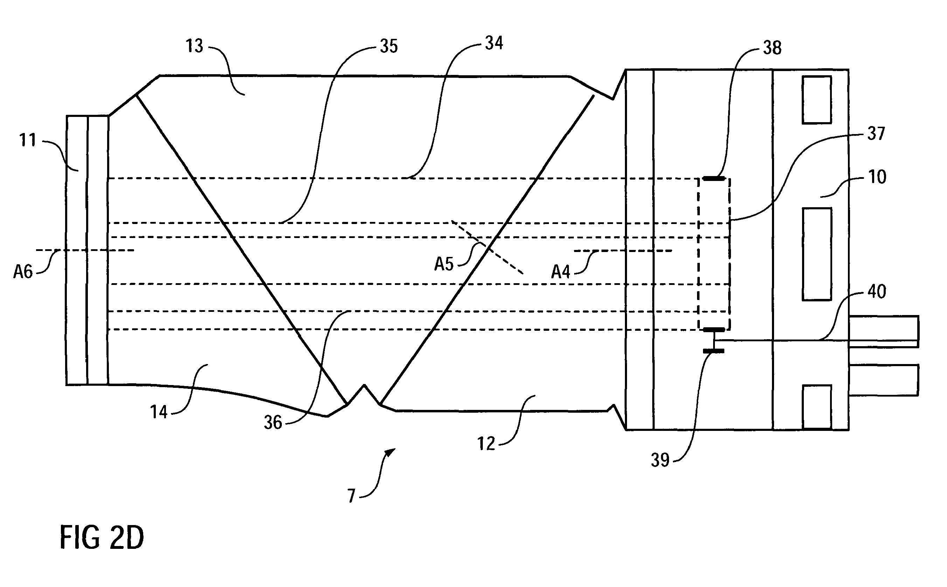

Aus Figur 2D ist weiterhin ersichtlich, dass die Roboterhandachse 7 eine Innendurchführung 34 aufweist, die aus einem flexiblen Schutzschlauch mit einem elektrischen Isolationsvermögen von 100 kV besteht. Die Innendurchführung 34 dient zur Durchführung von mehreren Versorgungsschläuchen 35, 36 zum Betrieb des Rotationszerstäubers 8.

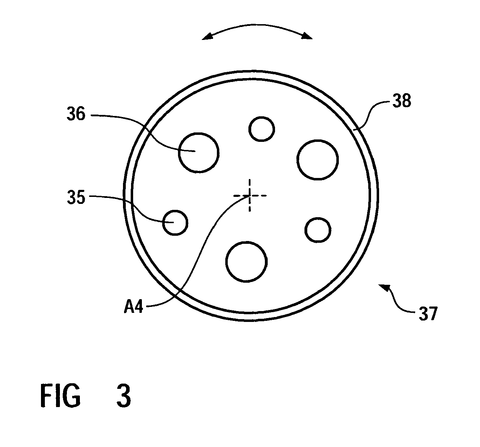

Die Versorgungsschläuche 35, 36 sind hierbei mit dem kinematisch ausgangsseitigen Anschlussflansch 11 drehfest verbunden, wohingegen die Versorgungsschläuche 35, 36 in dem kinematischen eingangsseitigen Anschlussflansch 10 in einer drehbar gelagerten Führungsscheibe 37 geführt werden, wobei die Führungsscheibe 37 auch in Figur 3 dargestellt ist.

Die Führungsscheibe 37 weist an ihrer Umfangsfläche eine Außenverzahnung 38 auf, die in eine Außenverzahnung eines Außenzahnrads 39 eingreift, wobei das Außenzahnrad 39 von einer weiteren Antriebswelle 40 gedreht werden kann.

Zum einen dient die Führungsscheibe 37 dazu, die Versorgungsschläuche 35, 36 in radialer Richtung und in Umfangsrichtung innerhalb der Innendurchführung 34 zu ordnen.

Zum anderen ist die Führungsscheibe 37 über die Antriebswelle 40, das Außenzahnrad 39 und die Außenverzahnung 38 der Führungsscheibe 37 drehbar, wobei die Drehung so erfolgt, dass die Versorgungsschläuche 35, 36 nur einer minimalen Torsionsbelastung unterworfen werden, wenn sich die Roboterhandachse 7 bewegt.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den durch die Ansprüche definierten Schutzbereich fallen.

## Patentansprüche

1. Roboterhandachse (7), insbesondere bei einem Lackierroboter, mit
a) mehreren Handgelenksteilen (10-14), die relativ zueinander drehbar sind,
b) einer Innendurchführung (34), die durch die Handgelenksteile (10-14) hindurch geht,
c) mindestens einem in der Innendurchführung (34) geführten flexiblen Versorgungsschlauch (35, 36),
**gekennzeichnet durch**
d) einen auf den Versorgungsschlauch (35, 36) wirkenden Schlauchantrieb (38-40) zur zwangsgeführten Drehung des Versorgungsschlauchs (35, 36) in der Innendurchführung (34) entsprechend der Drehung der Handgelenksteile (10-14).

2. Roboterhandachse (7) nach Anspruch 1, **dadurch gekennzeichnet, dass** der Schlauchantrieb in dem kinematisch eingangsseitigen Handgelenksteil und in dem kinematisch ausgangsseitigen Handgelenksteil auf den Versorgungsschlauch (35, 36) wirkt.

3. Roboterhandachse (7) nach Anspruch 1, **dadurch gekennzeichnet, dass** der Schlauchantrieb (38-40) nur in dem kinematisch eingangsseitigen Handgelenksteil (10) auf den Versorgungsschlauch (35, 36) wirkt, während der Versorgungsschlauch (35, 36) in dem kinematisch ausgangsseitigen Handgelenksteil (11) drehfest fixiert ist.

4. Roboterhandachse (7) nach einem der vorhergehenden Ansprüche, **dadurch gekennzeichnet, dass** der Versorgungsschlauch (35, 36) in dem kinematisch eingangsseitigen Handgelenksteil und/oder in dem kinematisch ausgangsseitigen Handgelenksteil und/oder in einem dazwischen befindlichen Handgelenksteil durch eine Führungsscheibe (37) geführt ist.

5. Roboterhandachse (7) nach Anspruch 4, **dadurch gekennzeichnet, dass** die Führungsscheibe (37) in dem kinematisch eingangsseitigen Handgelenksteil drehfest montiert ist.

6. Roboterhandachse (7) nach Anspruch 4 oder 5, **dadurch gekennzeichnet, dass** die Führungsscheibe (37) in dem kinematisch eingangsseitigen Handgelenksteil (10) und/oder in dem kinematisch ausgangsseitigen Handgelenksteil (14) und/oder in dem dazwischen befindlichen Handgelenksteil drehbar montiert ist.

7. Roboterhandachse (7) nach einem der vorhergehenden Ansprüche, **dadurch gekennzeichnet, dass** der Schlauchantrieb (38-40) auf die Führungsscheibe (37) wirkt und diese dreht.

8. Roboterhandachse (7) nach einem der vorhergehenden Ansprüche, **dadurch gekennzeichnet, dass** die Innendurchführung (34) ein elektrisches Isolationsvermögen von mindestens 50 kV aufweist.

9. Roboterhandachse (7) nach einem der vorhergehenden Ansprüche, **dadurch gekennzeichnet, dass** der Versorgungsschlauch (35, 36) molchbar und/oder ein Farbschlauch ist.

10. Roboter, insbesondere Lackierroboter, mit einer Roboterhandachse (7) nach einem der vorhergehenden Ansprüche.

11. Verwendung einer Roboterhandachse (7) nach einem der Ansprüche 1 bis 9 in einem Lackierroboter.

12. Betriebsverfahren eines Roboters, insbesondere eine Lackierroboters, mit
a) einer Roboterhandachse (7) mit mehreren relativ zueinander drehbaren Handgelenksteilen (10-14),
b) einer durch die Handgelenksteile (10-14) hindurch gehenden Innendurchführung (34) und
c) mindestens einem in der Innendurchführung (34) geführten flexiblen Versorgungsschlauch (35, 36),
**dadurch gekennzeichnet, dass**
d) der Versorgungsschlauch (35, 36) in der Innendurchführung (34) in Abhängigkeit von der Drehung der Handgelenksteile (10-14) durch einen Schlauchantrieb zwangsgeführt gedreht wird.

13. Betriebsverfahren nach Anspruch 12, **dadurch gekennzeichnet, dass** der Versorgungsschlauch (35, 36) sowohl in dem kinematisch eingangsseitigen Handgelenksteil als auch in dem kinematisch ausgangsseitigen Handgelenksteil zwangsgeführt gedreht wird.

14. Betriebsverfahren nach Anspruch 12, **dadurch gekennzeichnet, dass** der Versorgungsschlauch (35, 36) nur in dem kinematisch eingangsseitigen Handgelenksteil zwangsgeführt gedreht wird, während der Versorgungsschlauch (35, 36) in dem kinematisch ausgangsseitigen Handgelenksteil drehfest fixiert wird.

15. Betriebsverfahren nach einem der Ansprüche 12 bis 14, **dadurch gekennzeichnet, dass** der Versorgungsschlauch (35, 36) in dem kinematisch eingangsseitigen Handgelenksteil und/oder in dem kinematisch ausgangsseitigen Handgelenksteil und/oder in einem dazwischen befindlichen Handgelenksteil durch eine Führungsscheibe (37) geführt wird.

16. Betriebsverfahren nach Anspruch 15, **dadurch gekennzeichnet, dass** die Führungsscheibe (37) zwangsgeführt gedreht wird.

## Claims

1. A robot wrist (7), especially in a paint robot, with
a) several wrist sections (10-14) that can rotate with respect to one another,
b) an inner passage (34) that goes through the wrist sections (10-14),
c) at least one flexible supply tube (35, 36), guided in the inner passage (34),
**characterised by**
d) a tube drive (38-40) acting on the supply tube (35, 36) for positively-driven rotation of the supply tube (35, 36) in the inner passage (34), corresponding to the rotation of the wrist sections (10-14).

2. A robot wrist (7) according to Claim 1, **characterised in that** the tube drive acts on the supply tube (35, 36) in the wrist section on the kinematic input side and in the wrist section on the kinematic output side.

3. A robot wrist (7) according to Claim 1, **characterised in that** the tube drive (38-40) acts on the supply tube (35, 36) only in the wrist section (10) on the kinematic input side, whereas the supply tube (35, 36) is fixed torsion-free in the wrist section (11) on the kinematic output side.

4. A robot wrist (7) according to one of the preceding claims, **characterised in that** the supply tube (35, 36) is guided through a guide disk (37) in the wrist on the section kinematic input side, in the wrist section on the kinematic output side, and/or in a wrist section located between them.

5. A robot wrist (7) according to Claim 4, **characterised in that** the guide disk (37) is mounted torsion-free in the wrist section on the kinematic input side.

6. A robot wrist (7) according to Claim 4 or 5, **characterised in that** the guide disk (37) is mounted so as to rotate in the wrist section (10) on the kinematic input side, in the wrist section (14) on the kinematic output side, and/or in the wrist section located between them.

7. A robot wrist (7) according to one of the preceding claims, **characterised in that** the tube drive (38-40) acts on the guide disk (37) and rotates it.

8. A robot wrist (7) according to one of the preceding claims, **characterised in that** the inner passage (34) has an electrical insulating property of at least 50 kV.

9. A robot wrist (7) according to one of the preceding claims, **characterised in that** the supply tube (35, 36) is piggable and/or a paint tube.

10. A robot, especially a paint robot, with a robot wrist (7) according to one of the preceding claims.

11. Use of a robot wrist (7) according to one of Claims 1 through 9 in a paint robot.

12. A method of operation of a robot, especially a paint robot, with
a) a robot wrist (7) with several wrist sections (10-14) that can rotate relative to each other,
b) an inner passage (34) that goes through the wrist sections (10-14),
c) at least one flexible supply tube (35, 36) guided in the inner passage (34),
**characterised in that**
d) the supply tube (35, 36) is rotated, driven positively, in the inner passage (34) depending on the rotation of the wrist sections (10-14) by a tube drive.

13. A method of operation according to Claim 12, **characterised in that** the supply tube (35, 36) is rotated, driven positively, in the wrist section on the kinematic input side, as well as in the wrist section on the kinematic output side.

14. A method of operation according to Claim 12, **characterised in that** the supply tube (35, 36) is rotated, driven positively, only in the wrist section on the kinematic input side, whereas the supply tube (35, 36) is fixed, torsion-free, in the wrist section on the kinematic output side.

15. A method of operation according to one of Claims 12 through 14, **characterised in that** the supply tube (35, 36) is guided through a guide disk (37) in the wrist section on the kinematic input side and/or in the wrist section on the kinematic output side and/or in a wrist section located between them.

16. A method of operation according to Claim 15, **characterised in that** the guide disk (37) is rotated, driven positively.

## Revendications

1. Poignet de robot (7), en particulier pour un robot de peinture, comportant
a) plusieurs parties de poignet (10-14), pouvant tourner les unes par rapport aux autres,
b) un passage intérieur (34) qui traverse les parties de poignet (10-14),
c) au moins un tuyau flexible d'alimentation (35, 36), guidé à travers le passage intérieur (34),
**caractérisé par**
d) un système d'entraînement (38-40) agissant sur le tuyau flexible d'alimentation (35, 36) pour une rotation forcée du tuyau flexible d'alimentation (35, 36) dans le passage intérieur (34) conformément à la rotation des parties de poignet (10-14).

2. Poignet de robot (7) selon la revendication 1, **caractérisé en ce que** le système d'entraînement du tuyau flexible agit sur le tuyau flexible d'alimentation (35, 36) dans la partie de poignet du côté cinématiquement d'entrée et la partie de poignet du côté cinématiquement de sortie.

3. Poignet de robot (7) selon la revendication 1, **caractérisé en ce que** le système d'entraînement (38-40) du tuyau flexible agit sur le tuyau flexible d'alimentation (35, 36) uniquement dans la partie de poignet (10) du côté cinématiquement d'entrée, alors que le tuyau flexible d'alimentation (35, 36) est fixé immobile en rotation dans la partie de poignet (11) du côté cinématiquement de sortie.

4. Poignet de robot (7) selon l'une quelconque des revendications précédentes, **caractérisé en ce que** le tuyau flexible d'alimentation (35, 36) est guidé à travers un disque de guidage (37) dans la partie de poignet du côté cinématiquement d'entrée et/ou dans la partie de poignet du côté cinématiquement de sortie et/ou dans la partie de poignet située entre ces dernières.

5. Poignet de robot (7) selon la revendication 4, **caractérisé en ce que** le disque de guidage (37) est monté immobile en rotation dans la partie de poignet du côté cinématiquement d'entrée.

6. Poignet de robot (7) selon la revendication 4 ou 5, **caractérisé en ce que** le disque de guidage (37) est monté rotatif dans la partie de poignet du côté cinématiquement d'entrée et/ou dans la partie de poignet du côté cinématiquement de sortie et/ou dans la partie de poignet située entre ces dernières.

7. Poignet de robot (7) selon l'une quelconque des revendications précédentes, **caractérisé en ce que** le système d'entraînement (38-40) du tuyau flexible agit sur le disque de guidage (37) et fait tourner celui-ci.

8. Poignet de robot (7) selon l'une quelconque des revendications précédentes, **caractérisé en ce que** le passage intérieur (34) possède un pouvoir isolant électrique de 50 kV au moins.

9. Poignet de robot (7) selon l'une quelconque des revendications précédentes, **caractérisé en ce que** le tuyau flexible d'alimentation (35, 36) peut être écouvillonné et/ou est un tuyau flexible de peinture.

10. Robot industriel, en particulier robot de peinture, comportant un poignet de robot (7) selon l'une quelconque des revendications précédentes.

11. Utilisation d'un poignet de robot (7) selon l'une quelconque des revendications 1 à 9 dans un robot de peinture.

12. Procédé de fonctionnement d'un robot industriel, en particulier d'un robot de peinture, comportant
a) un poignet de robot (7) muni de plusieurs parties de poignet (10-14), pouvant tourner les unes par rapport aux autres,
b) un passage intérieur (34) qui traverse les parties de poignet (10-14),
c) au moins un tuyau flexible d'alimentation (35, 36), guidé dans le passage intérieur (34),
**caractérisé en ce que**
d) le tuyau flexible d'alimentation (35, 36) dans le passage intérieur (34) est entraîné en rotation forcée par un système d'entraînement du tuyau flexible en fonction de la rotation des parties de poignet (10-14).

13. Procédé de fonctionnement selon la revendication 12, **caractérisé en ce que** le tuyau flexible d'alimentation (35, 36) est entraîné en rotation forcée tant dans la partie de poignet du côté cinématiquement d'entrée que dans partie de poignet du côté cinématiquement de sortie.

14. Procédé de fonctionnement selon la revendication 12, **caractérisé en ce que** le tuyau flexible d'alimentation (35, 36) est entraîné en rotation forcée uniquement dans la partie de poignet du côté cinématiquement d'entrée, tandis que tuyau flexible d'alimentation (35, 36) est fixé immobile en rotation dans la partie de poignet du côté cinématiquement de sortie.

15. Procédé de fonctionnement selon l'une quelconque des revendications 12 à 14, **caractérisé en ce que** le tuyau flexible d'alimentation (35, 36) est guidé à travers un disque de guidage (37) dans la partie de poignet du côté cinématiquement d'entrée et/ou dans la partie de poignet du côté cinématiquement de sortie et/ou dans la partie de poignet située entre ces dernières.

16. Procédé de fonctionnement selon la revendication 15, **caractérisé en ce que** le disque de guidage (37) est entraîné en rotation forcée.
